# EUROPÄISCHE PATENTSCHRIFT

(11) **EP 1 325 661 B1**
(45) Veröffentlichungstag und Bekanntmachung des Hinweises auf die Patenterteilung: **02.11.2016**
(21) Anmeldenummer: 01986832.2
(22) Anmeldetag: 08.10.2001
(51) Int. Cl.: H04W 64/00, H04W 88/02

(54) **ENDEINRICHTUNG, DATEN- UND/ODER KOMMUNIKATIONSSYSTEM SOWIE VERFAHREN ZUM LOKALISIEREN EINER ÜBERTRAGUNGSEINRICHTUNG EINER ENDEINRICHTUNG**
TERMINAL, DATA AND/OR COMMUNICATIONS SYSTEM, AND METHOD FOR LOCALIZING A TRANSMISSION DEVICE OF A TERMINAL
ÉQUIPEMENT TERMINAL, SYSTÈME DE TRANSMISSION DE DONNÉES ET/OU DE COMMUNICATION ET PROCÉDÉ POUR LOCALISER UN DISPOSITIF DE TRANSMISSION D'UN ÉQUIPEMENT TERMINAL

(30) Priorität: 09.10.2000 DE 10050668
(43) Veröffentlichungstag der Anmeldung: 09.07.2003
(73) Patentinhaber: Vodafone Holding GmbH, 40213 Düsseldorf (DE)
(72) Erfinder: HERTLE, Jochen, 85521 Ottobrunn (DE); LANG, Thomas, 81543 München (DE)
(74) Vertreter: Jostarndt Patentanwalts-AG
(86) Internationale Anmeldenummer: PCT/DE2001/003873
(87) Internationale Veröffentlichungsnummer: WO 2002/032158

(56) Entgegenhaltungen:
- EP-A- 0 731 621
- EP-A2- 0 923 256
- WO-A-00/19763

## Beschreibung

Die vorliegende Erfindung betrifft ein Verfahren zum Lokalisieren einer Übertragungseinrichtung einer Endeinrichtung.

Netzwerke der genannten Art sind bereits bekannt. Bei einem bekannten Datennetzwerk handelt es sich beispielsweise um das Internet, während Kommunikationsnetzwerke beispielsweise in Form von Mobilfunknetzen realisiert sind.

In einem Mobilfunksystem empfangen und/oder übertragen die Nutzer des Systems Daten und/oder Signale aus dem und/oder in das Mobilfunknetz über entsprechende Endeinrichtungen. Jede Endeinrichtung weist eine Übertragungseinrichtung auf, die beispielsweise als Mobiltelefon (Handy), als Modem oder dergleichen ausgebildet sein kann. Die Anzahl der Endeinrichtungen in einem Mobilfunksystem hängt von der Anzahl der Nutzer ab und ist daher beliebig.

Mit zunehmender Verbreitung von Mobiltelefonen wird es immer interessanter, deren jeweilige Standorte zu kennen und die ermittelten Standortdaten für andere Dienste nutzbar zu machen.

Die Lokalisierung von Mobiltelefonen kann beispielsweise auf der Basis von bestimmten Parametern aus dem Mobilfunknetz erfolgen. Wenn das Mobilfunknetz beispielsweise als zellulares Mobilfunknetz ausgebildet ist, läßt sich über eine Identifikation der Mobilfunkzelle, in der sich das zu lokalisierende Mobiltelefon gerade befindet, relativ genau der aktuelle Standort des Mobiltelefons bestimmen.

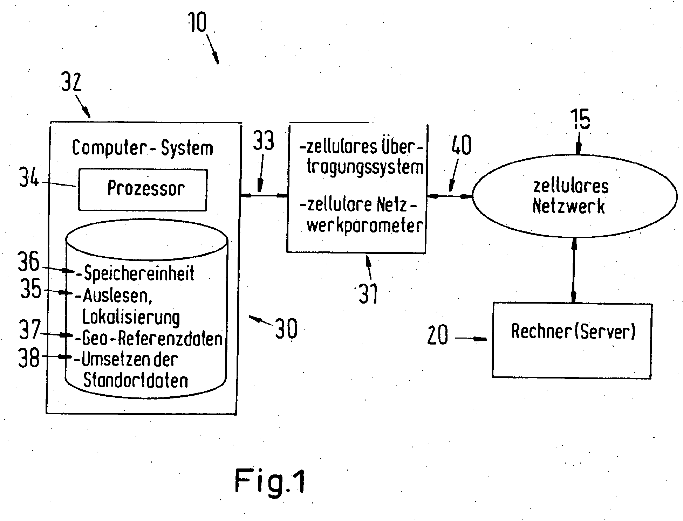

Das Dokument EP-A-0 731 621 zeigt eine Endeinrichtung (siehe D1, Spalte 2, Zeile 45 bis Spalte 3, Zeile 8) zur Verwendung mit einem Daten- und Kommunikationsnetzwerk eines Kommunikationssystems (siehe D1, Fig. 1, Element 10; Spalte 2, ab Zeile 51), mit einer Übertragungseinrichtung zum Übertragen von Signalen in das Netzwerk (siehe D1, Fig. 1, Element 16; Spalte 2, ab Zeile 50) und mit einer von der Übertragungseinrichtung unabhängigen Rechnereinheit, die mit der Übertragungseinrichtung zeitweilig verbunden ist, aufweisend eine Prozessoreinheit (siehe D1, Spalte 2, Zeile 50), eine Schnittstelle zur Übertragungseinrichtung und Mittel zum Auslesen solcher Netzwerkparameter über die Übertragungseinrichtung (siehe D1, Spalte 2, ab Zeile 52), die zum Lokalisieren der Übertragungseinrichtung verwendet werden, und zum Bestimmen des aktuellen Standorts der Übertragungseinrichtung (siehe D1, Spalte 3, ab Zeile 1).

Der Erfindung lag die Aufgabe zugrunde, die Standortdaten unabhängig von der Übertragungseinrichtung zu ermitteln, zu speichern und gegebenenfalls, z.B. zur Erstellung eines Bewegungsprofils, weiter zu verwerten.

Die erforderlichen Parameter zur Lokalisierung des Mobiltelefons lassen sich beispielsweise direkt aus dem Mobilfunknetz gewinnen. Ebenso ist es möglich, daß die entsprechenden Daten zunächst im Mobiltelefon gesammelt und anschließend an einen separaten Rechner übertragen werden. Der separate Rechner kann in diesem Fall beispielsweise ein dem Mobilfunknetz zugeordneter Server sein.

Das Dokument EP-A-0 731 621 zeigt eine Endeinrichtung zur Verwendung mit einem Daten- und Kommunikationsnetzwerk eines Kommunikationssystems, mit einer Übertragungseinrichtung zum Übertragen von Signalen in das Netzwerk und mit einer von der Übertragungseinrichtung unabhängigen Rechnereinheit, die mit der Übertragungseinrichtung zeitweilig verbunden ist, aufweisend eine Prozessoreinheit, eine Schnittstelle zur Übertragungseinrichtung und Mittel zum Auslesen solcher Netzwerkparameter über die Übertragungseinrichtung, die zum Lokalisieren der Übertragungseinrichtung verwendet werden, und zum Bestimmen des aktuellen Standorts der Übertragungseinrichtung.

Der Erfindung lag die Aufgabe zugrunde, die Standortdaten unabhängig von der Übertragungseinrichtung zu ermitteln, zu speichern und gegebenenfalls, z.B. zur Erstellung eines Bewegungsprofils, weiter zu verwerten

Der Erfindung liegt daher die Aufgabe zugrunde, Lösungen bereitzustellen, mit denen entsprechende Endeinrichtungen eines Systems auch systembetreiberunabhängig lokalisiert werden können.

Die Erfindung wird in den Patentansprüche dargestellt.

Diese Aufgabe wird gelöst durch ein Verfahren zum Lokalisieren einer Übertragungseinrichtung einer wie nachstehend beschriebenen Endeinrichtung in einem Daten- und/oder Kommunikationssystem, insbesondere einem wie nachstehend beschriebenen Daten- und/oder Kommunikationssystem, wobei mit der Übertragungseinrichtung Daten und/oder Signale aus einem und/oder in ein Daten- und/oder Kommunikationsnetzwerk des Daten- und/oder Kommunikationssystems übertragen werden. Das erfindungsgemäße Verfahren weist folgende Schritte auf:
a) die Mittel zum Auslesen der Netzwerkparameter und zum Bestimmen des Standorts der Übertragungseinrichtung nehmen über die Schnittstelle Zugriff auf die Übertragungseinrichtung und lesen solche Netzwerkparameter aus, die vom Netzwerk zum Lokalisieren der Übertragungseinrichtung verwendet werden;
b) die Mittel zum Auslesen der Netzwerkparameter und zum Bestimmen des Standorts der Übertragungseinrichtung senden die ausgelesenen Netzwerkparameter an einen mit dem Netzwerk kommunizierenden -separaten - Rechner;
c) im Rechner wird der aktuelle Standort der Übertragungseinrichtung aufgrund der ausgelesenen Netzwerkparameter bestimmt.

Durch das erfindungsgemäße Verfahren wird es auf einfache und zuverlässige Weise möglich, Endgeräte unabhängig vom Betreiber eines Daten- und/oder Kommunikationssystems lokalisieren zu können. Zu den Vorteilen, Wirkungen, Effekten und der Funktionsweise des erfindungsgemäßen Verfahrens wird auf die nachstehenden Ausführungen zur Endeinrichtung sowie zum Daten- und/oder Kommunikationssystem vollinhaltlich bezug genommen und hiermit verwiesen.

Vorzugsweise werden den ausgelesenen Netzwerkparametern über in den Mitteln zum Auslesen der Netzwerkparameter und zum Bestimmen des Standorts der Übertragungseinrichtung und/oder in dem Rechner vorgesehene Programmittel Geo-Referenzdaten zugeordnet.

Insbesondere können den ausgelesenen Netzwerkparametern Beschreibungen des durch die Netzwerkparameter bestimmten Standorts zugeordnet werden.

Die ausgelesenen Netzwerkparameter und/oder die daraus bestimmten Standortdaten können vorzugsweise in einer Speichereinheit abgespeichert werden.

Vorteilhaft kann eine Übertragungseinrichtung in einem Mobilfunknetz, insbesondere in einem zellularen Mobilfunknetz, lokalisiert werden.

Für das erfindungsgemäße Verfahren wird eine Endeinrichtung zur Verwendung mit einem Daten- und/oder Kommunikationsnetzwerk eines Daten- und/oder

Kommunikationssystems bereitgestellt, mit einer Übertragungseinrichtung zum Empfangen und/oder Übertragen von Daten und/oder Signalen aus dem und/oder in das Netzwerk und mit einer von der Übertragungseinrichtung unabhängigen Rechnereinheit, die mit der Übertragungseinrichtung zumindest zeitweilig über eine Schnittstelle der Rechnereinheit verbunden ist, wobei die Übertragungseinrichtung und die Rechnereinheit über die Schnittstelle je nach Bedarf kommunizieren, interagieren und Daten und/oder Signale austauschen können, aufweisend eine Prozessoreinheit und Mittel zum Auslesen solcher Netzwerkparameter über die Übertragungseinrichtung, die zum Lokalisieren der Übertragungseinrichtung verwendet werden, und zum Bestimmen des aktuellen Standorts der Übertragungseinrichtung.

Dabei ist die Erfindung nicht auf bestimmte Typen von Endeinrichtungen, Daten- und/oder Kommunikationssystemen sowie Daten- und/oder Kommunikationsnetzen beschränkt. Als Endeinrichtung wird im Lichte der vorliegenden Erfindung daher jede Art von Geräten oder Gerätebestandteilen verstanden, die ein Nutzer des jeweiligen Systems verwendet, um in diesem System aktiv zu sein. Einige nicht ausschließliche Beispiele vorteilhafter Endeinrichtungen werden im weiteren Verlauf der Beschreibung näher erläutert.

Die Endeinrichtung kann aus zwei Hauptkomponenten bestehen, die von einander unabhängig sind, die aber über eine entsprechende Schnittstelle zumindest zeitweilig miteinander verbunden sind. Über diese Schnittstelle können die beiden Hauptkomponenten je nach Bedarf kommunizieren, interagieren und Daten und/oder Signale austauschen.

Bei der ersten Hauptkomponente handelt es sich um die Übertragungseinrichtung. Diese dient generell zum Empfangen und/oder Übertragen von Daten und/oder Signalen aus dem und/oder in das Netzwerk. Die Erfindung ist nicht auf bestimmte Typen von Übertragungseinrichtungen beschränkt. Einige nicht ausschließliche Beispiele hierzu werden im weiteren Verlauf der Beschreibung näher erläutert.

Bei der zweiten Hauptkomponente handelt es sich um die von der Übertragungseinrichtung unabhängige Rechnereinheit. Diese weist neben der Schnittstelle eine Prozessoreinheit und besondere Mittel auf, mit denen über die Übertragungseinrichtung solche Netzwerkparameter ausgelesen werden können, die zum Lokalisieren der Übertragungseinrichtung verwendet werden. Weiterhin kann über diese Mittel aufgrund der ausgelesenen Netzwerkparameter der aktuelle Standort der Übertragungseinrichtung bestimmt werden.

Über diese Mittel ist es möglich, die bisher nur dem Betreiber des Daten- und/ oder Kommunikationssystems vorbehaltenen Daten bezüglich einer Lokalisierung der Endeinrichtung auch für Dritte nutzbar zu machen. Dazu nehmen die Mittel über die Schnittstelle zunächst Zugriff auf die Übertragungseinrichtung, in der die zur Lokalisierung erforderlichen Netzwerkparameter beispielsweise abgelegt sind. Ebenso ist es denkbar, daß diese Parameter über die Übertragungseinrichtung aus dem Netzwerk ausgelesen werden.

Die Mittel zum Auslesen der Netzwerkparameter und zum Bestimmen des Standorts der Übertragungseinrichtung lesen also zunächst diejenigen Netzwerkparameter aus, die vom Daten- und/oder Kommunikationssystem dazu verwendet werden die jeweilige Endeinrichtung zu lokalisieren.

In einem zweiten Schritt wird in den genannten Mitteln aus diesen Parameterdaten der aktuelle Standort der Übertragungseinrichtung bestimmt. Einige nicht ausschließliche Beispiele, wie eine solche Bestimmung des Standorts erfolgen kann, werden im weiteren Verlauf der Beschreibung näher erläutert.

Erfindungsgemäß werden die von den Mitteln ausgelesenen Netzwerkparameter auf einen anderen Rechner übertragen, wo sie dann zur Bestimmung des Standorts weiterverarbeitet werden. In diesem Fall besteht die Tätigkeit der besagten Mittel im Zusammenhang mit der Bestimmung des aktuellen Standorts darin, die ausgelesenen Parameter an den entsprechenden weiteren Rechner zu leiten.

Die auf diese Weise bestimmten Standortdaten können dann beispielsweise angezeigt, weiter verwertet oder an andere Rechner, Systeme und dergleichen weitergeleitet werden. Die Übertragung der auf diese Weise bestimmten Standortdaten kann wiederum über die Übertragungseinrichtung erfolgen.

Bei dem erfindungsgemäßen Verfahren sind die Übertragungseinrichtung und die Rechnereinheit voneinander unabhängige Komponenten. Mit der vorliegenden Erfindung soll nicht die Situation abgedeckt werden, in der eine sogenannte SIM-Karte verwendet wird. SIM-Karten, die aus dem Stand der Technik bereits bekannt sind, sind Bestandteile der jeweiligen Übertragungseinrichtung und daher keine von dieser separate, unabhängige Rechnereinheit gemäß der vorliegenden Erfindung.

Vorteilhaft kann/können die Übertragungseinrichtung und/oder die Rechnereinheit mobil ausgestaltet sein. Durch die mobile Ausgestaltung kann auf einfache und dennoch genaue Weise ein Bewegungsprofil der Endeinrichtungen erstellt werden.

Eine solche Ausgestaltung ist insbesondere dann sinnvoll, wenn die Endeinrichtung zur Verwendung in einem Mobilfunknetz, insbesondere in einem zellularen Mobilfunknetz ausgebildet sein soll.

In einem Mobilfunknetz existieren verschiedene Möglichkeiten und Netzwerkparameter. über die eine entsprechende Endeinrichtung, beispielsweise ein Mobiltelefon, lokalisiert werden können. Bei zellularen Mobilfunknetzen kann hierzu beispielsweise die Identifikation der Mobilfunkzelle (Celt-ID), in der sich die zu lokalisierende Endeinrichtung gerade befindet, herangezogen werden. Ebenso ist es möglich, die sogenannten Timing Advance (TA) Parameter zu berücksichtigen. Diese Parameter geben solcherlei Auskunft, die auf dem Voranschreiten von Zeit, beispielsweise dem Zeitraum zwischen zwei Meßvorgängen, dem Zeitraum, wie lange die Endeinrichtung in Betrieb ist und dergleichen, basieren. Eine weitere Möglichkeit ist die Messung der Signalstärke, die Zeitdifferenz bis zur Ankunft von aus dem Netzwerk abgerufenen Nachrichten (Down-Link-Messages) und dergleichen.

Wenn die Endeinrichtung in einem Mobilfunknetz, verwendet wird, können bei erfindungsgemäßer Lokalisierung der Endeinrichtungen, die in einem solchen Fall in der Rege! auch ein Mobiltelefon umfassen, in bezug auf den Betreiber des Mobilfunksystems unabhängige Dienste eingerichtet werden, die ein Bewegungsprofil der Endeinrichtungen darstellen. Dies ist beispielsweise im Zusammenhang mit Verkehrsinformationen von Vorteil. In einem solchen Fall kann für jede Endeinrichtung der genaue Standort bestimmt werden. Die ermittelten Standortdaten werden erfindungsgemäß von einem separaten Rechner, der nicht Bestandteil des Daten- und/oder Kommunikationssystems sein muß, ausgewertet und weiter verarbeitet. Dazu muß dieser Rechner lediglich mit der jeweiligen Endeinrichtung verbunden werden, was beispielsweise über eine Mobilfunkverbindung erfolgen kann.

Vorzugsweise können die Übertragungseinrichtung und die Rechnereinheit als ein einziges Bauteil ausgebildet sein. In diesem Fall ist die Endeinrichtung ebenfalls als ein einziges Bauteil ausgestaltet. In anderer Ausgestaltung ist es auch denkbar, daß die Übertragungseinrichtung und die Rechnereinheit als separate Bauteile ausgebildet sind.

Vorteilhaft kann die Endeinrichtung wenigstens eine Speichereinheit aufweisen. In dieser Speichereinheit können die ausgelesenen Netzwerkparameter, die daraus bestimmten Standortdaten und dergleichen abgelegt werden, so daß hierauf auch zu späteren Zeitpunkten immer wieder eine Zugriffsmöglichkeit besteht. Dabei kann die Speichereinheit insbesondere in der Rechnereinheit und/oder in der Übertragungseinrichtung vorgesehen sein.

In weiterer Ausgestaltung können die Mittel zum Auslesen der Netzwerkparameter und zum Bestimmen des Standorts der Übertragungseinrichtung Programmittel aufweisen, die den ausgelesenen Netzwerkparametern Geo-Referenzdaten zuordnen. Die Programmittel können als geeignete Computerprogramme, Betriebsprogramme oder Software vorliegen. Besonders vorteilhaft können die Programmittel zur Zuordnung der ausgelesenen Netzwerkparameter zu einer Beschreibung des durch die Netzwerkparameter bestimmten Standorts ausgebildet sein.

Diese Zuordnung soll anhand eines konkreten Beispiels verdeutlicht werden. Wenn es sich bei dem Kommunikationssystem beispielsweise um ein zellulares Mobilfunksystem handelt, kann von den entsprechenden Mitteln im ersten Schritt beilspielsweise die Zellenidentifikation ausgelesen werden. Diese Zellenidentifikation hat beispielsweise eine bestimmte Nummer. Im nächsten Schritt werden dieser Zellenidentifikation über die Programmittel beispielsweise bestimmte Geo-Referenzdaten zugeordnet. Dazu kann die Zellenidentifikation etwa einer bestimmten Beschreibung desjenigen Ortes zugeordnet werden, der durch die jeweiligen Netzwerkparameter, im vorliegenden Fall die Zellenidentifikation, bestimmt wurde. Die Geo-Referenzdaten können ebenfalls in der Speichereinheit gespeichert werden.

Beispiele für geeignete Ortsbeschreibungen sind unter anderem Städtenamen, Straßennamen, vom Nutzer frei definierte Namen für Orte, Geo-Koordinaten und dergleichen. Natürlich sind auch andere Ortsbeschreibungen denkbar, so daß die Erfindung nicht auf die genannten Beispiele beschränkt ist.

Vorzugsweise kann die Endeinrichtung auch solche Mittel aufweisen, die zur Umsetzung der bestimmten Standortdaten ausgebildet sind. Diese Mittel können dann die vom Betreiber des Daten- und/oder Kommunikationssystems unabhängig bestimmten Standortdaten weiter verwerten. Zu denken ist hier beispielsweise an Navigationseinrichtungen und dergleichen.

Vorteilhaft kann die Schnittstelle als Infrarot-Schnittstelle, als Bluetooth-Schnittstelle oder als Verdrahtung ausgebildet sein. Beim Bluetooth-Standard handelt es sich um einen Funkstandard, der eine kabellose Kommunikation zwischen verschiedensten Geräten ermöglicht.

Vorzugsweise kann die Übertragungseinrichtung als Mobiltelefon, insbesondere als zellulares Mobiltelefon ausgebildet sein. In anderer Ausgestaltung kann sie auch als Modem, insbesondere als zellulares Modem, ausgebildet sein. Das Modem kann beispielsweise in der Rechnereinheit integriert oder dazu extern sein. Die Erfindung ist nicht auf die genannten Beispiele beschränkt.

Die Rechnereinheit kann beispielsweise als Personal Digital Assistant (PDA) ausgebildet sein, der mit der Übertragungseinrichtung kommuniziert. Bei einem PDA handelt es sich im allgemeinen um einen leichten Palmcomputer mit speziellem Funktionsumfang, der sowohl der persönlichen Organisation, als auch der Kommunikation dient. Viele PDAs beinhalten auch Multimedia-Merkmale. Ebenso kann die Rechnereinheit als mobiler Computer ausgebildet sein. Hierbei kann es sich beispielsweise um einen gewöhnlichen Laptop, ein Notebook und dergleichen handeln. Weiterhin kann die Rechnereinheit auch als Fahrzeugrechner ausgebildet sein. Die Rechnereinheit kann in diesen Fällen mit der Übertragungseinrichtung entweder als ein einziges oder als jeweils separates Bauteil ausgestaltet sein. Die Erfindung ist selbstverständlich nicht auf die genannten Beispiele beschränkt.

Gemäß einem zweiten Aspekt wird ein Daten- und/oder Kommunikationssystem bereitgestellt, mit einem Daten- und/oder Kommunikationsnetzwerk und einer oder mehreren wie vorstehend beschriebenen Endeinrichtung(en).

In dem System können auf einfache und zuverlässige Weise Endeinrichtungen unabhängig vom Betreiber des Systems lokalisiert werden. Dazu kann zunächst vorgesehen sein, daß die Standortdaten -wie dies weiter oben bereits ausführlich beschrieben wurde- innerhalb der Rechnereinheit der Endeinrichtung bestimmt werden.

Gemäß des Erfinding ist im System wenigstens ein mit dem Netzwerk zumindest zeitweilig verbundener und mit diesem kommunizierender Rechner vorgesehen. Die Standortdaten werden auf diesem Rechner, der dann als Server dienen kann, bestimmt. Bei einer solchen Ausgestaltung des Systems können über die Mittel zum Auslesen der Netzwerkparameter und zum Bestimmen des Standorts der Endeinrichtung die entsprechenden Netzwerkparameter in der wie weiter oben beschriebenen Weise zunächst ausgelesen werden. Anschließend werden die so ausgelesenen Netzwerkparameter von der Rechnereinheit über die Übertragungseinrichtung an den separaten Rechner geschickt. Der separate Rechner (Server) übernimmt dann die weiteren Berechnungen und Bestimmungen, um den Netzwerkparametern entsprechende Geo-Referenzdaten zuzuordnen. Dabei erfolgt die Bestimmung in der weiter oben bereits beschriebenen Weise, so daß diesbezüglich auf die vorstehenden Ausführungen verwiesen und vollinhaltlich bezug genommen wird.

Der separate Rechner kann beispielsweise Bestandteil des Daten- und/oder Kommunikationsnetzwerks sein. In diesem Fall wäre er diesem zugeordnet. Es ist aber auch denkbar, daß der Rechner vom Netzwerk unabhängig ist. In diesem Fall würde der Rechner als eine Art "Endeinrichtung" fungieren.

Vorteilhaft kann das Datennetzwerk das Internet sein. Bei dem Kommunikationsnetzwerk kann es sich beispielsweise um ein Mobilfunknetz insbesondere ein zellulares Mobilfunknetz, handeln. Dabei können die Netzwerke jeweils einzeln und unabhängig voneinander, oder aber auch in Kombination miteinander verwirklicht sein.

ein Verfahren zum Lokalisieren einer Übertragungseinrichtung einer wie nach, stehend beschriebenen Endeinrichtung in einem Daten- und/oder Kommunikationssystem, insbesondere einem wie nachstehend beschriebenen Daten- und/oder Kommunikationssystem, wobei mit der Übertragungseinrichtung Daten und/oder Signale aus einem und/oder in ein Daten- und/oder Kommunikationsnetzwerk des Daten- und/oder Kommunikationssystems übertragen werden. Das erfindungsgemäß Verfahren weist folgende Schritte auf:
a) die Mittel zum Auslesen der Netzwerkparameter und zum Bestimmen des Standorts der Übertragungseinrichtung nehmen über die Schnittstelle Zugriff auf die Übertragungseinrichtung und lesen solche Netzwerkparameter aus, die vom Netzwerk zum Lokalisieren der Übertragungseinrichtung verwendet werden;
b) die Mittel zum Auslesen der Netzwerkparameter und zum Bestimmen des Standorts der Übertragungseinrichtung senden die ausgelesenen Netzwerkparameter an einen mit dem Netzwerk kommunizierenden -separaten -Rechner;
c) im Rechner wird der aktuelle Standort der Übertragungseinrichtung aufgrund der ausgelesenen Netzwerkparameter bestimmt.

Durch das erfindungsgemäße Verfahren wird es auf einfache und zuverlässige Weise möglich, Endgeräte unabhängig vom Betreiber eines Daten- und/oder Kommunikationssystems lokalisieren zu können. Zu den Vorteilen. Wirkungen, Effekten und der Funktionsweise des erfindungsgemäßen Verfahrens wird auf die nach, stehenden Ausführungen zur Endeinrichtung sowie zum Daten- und/oder Kommunikationssystem vollinhaltlich bezug genommen und hiermit verwiesen.

Vorzugsweise werden den ausgelesenen Netzwerkparametern über in den Mitteln zum Auslesen der Netzwerkparameter und zum Bestimmen des Standorts der Übertragungseinrichtung und/oder in dem Rechner vorgesehene Programmittel Geo-Referenzdaten zugeordnet.

Insbesondere können den ausgelesenen Netzwerkparametern Beschreibungen des durch die Netzwerkparameter bestimmten Standorts zugeordnet werden.

Die ausgelesenen Netzwerkparameter und/oder die daraus bestimmten Standortdaten können vorzugsweise in einer Speichereinheit abgespeichert werden.

Vorteilhaft kann eine Übertragungseinrichtung in einem Mobilfunknetz, insbesondere in einem zellularen Mobilfunknetz, lokalisiert werden.

Die Erfindung wird nun anhand eines Ausführungsbeispiels unter Bezugnahme auf die beiliegende Zeichnung näher erläutert. Dabei zeigt die einzige Figur 1 in schematischer Ansicht ein Daten- und/oder Kommunikationssystem.

In Figur 1 ist ein als Mobilfunksystem ausgebildetes Kommunikationssystem 10 dargestellt, bei dem unabhängig vom Betreiber des Mobilfunksystems 10 eine Lokalisierung entsprechender Endeinrichtungen 30 vorgenommen werden soll. Im vorliegenden Beispiel sollen insbesondere Übertragungseinrichtungen 31 der Endeinrichtungen 30 lokalisiert werden, bei denen es sich um Mobiltelefone handelt.

Das Mobilfunksystem 10 weist zunächst ein Mobilfunknetz 15 auf, über das eine beliebige Anzahl von Endeinrichtungen 30 kommunizieren können. Zum besseren Verständnis ist in Figur 1 nur eine einzige Endeinrichtung 30 dargestellt.

Die Endeinrichtung 30 weist zunächst die als Mobiltelefon ausgestaltete Übertragungseinrichtung 31 auf. Diese dient zum Empfangen und/oder Übertragen von Daten und/oder Signalen 40 aus dem und/oder in das Netzwerk 15.

Weiterhin ist eine von der Übertragungseinrichtung 31 unabhängige Rechnereinheit 32 vorgesehen, die im vorllegenden Fall als PDA (Personal Digital Assistant) ausgebildet ist. Rechnereinheit 32 und Übertragungseinrichtung 31 sind im vorliegenden Beispiel als jeweils unabhängige Bauteile ausgebildet, könnten aber auch in einem einzigen Bauteil integriert sein. Auf jeden Fall sind beide Bauteile als mobile Bauteile ausgebildet. Die Rechnereinheit 32 ist zumindest zeitweilig über eine geeignete Schnittstelle 33 mit der Übertragungseinheit 31 verbunden. Die Rechnereinheit 32 weist weiterhin eine Prozessoreinheit 34, eine Speichereinheit 36 und Mittel 35 zum Auslesen von Netzwerkparametern und zum Bestimmen des Standorts der Übertragungseinrichtung 31 auf.

Erfindungsgemäß ist noch ein separater Rechner 20 vorgesehen, der als Server fungiert und mit dem Netzwerk 15 verbunden ist. Der Rechner 20 kann Bestandteil des Netzwerks 15, oder aber auch ein vom Netzwerk unabhängiger Rechner sein. In diesem Fall fungiert der Rechner 20 ebenfalls als eine Art "Endeinrichtung".

Um nun die Übertragungseinrichtung 31 beziehungsweise das Mobiltelefon unabhängig vom Netzbetreiber lokalisieren zu können, müssen die Mittel 35 die folgenden Aufgaben erfüllen können:
In einem ersten Schritt greifen die Mittel 35 über die Schnittstelle 33 auf die Übertragungseinrichtung 31 zu, und lesen diejenigen Netzwerkparameter aus, die zur Bestimmung der Übertragungseinrichtung verwendet werden. Hierbei kann e sich beispielsweise um Informationen bezüglich der Identifikation von den Mobilfunkzellen handeln.

In einem zweiten Schritt berechnen die Mittel 35 unter Verwendung geeigneter Programmittel den Standort der Übertragungseinrichtung 31, indem den ausgelesenen Netzwerkparametem bestimmte Geo-Referenzdaten 37 zugeordnet werden. Dabei können die Netzwerkparameter beispielsweise entsprechenden Beschreibungen derjenigen Standorte zugeordnet werden, die durch jeweiligen Netzwerkparameter bestimmt wurden. Solche Beschreibungen sind beispielsweise Städtenamen, Straßennamen, vom Nutzer des Systems frei gewählte Bezeichnungen, Geo-Keordinaten und dergleichen.

Die Netzwerkparameter sowie alle im Hinblick auf den Standort bestimmten Daten können in der Speichereinheit 36 abgespeichert werden.

Die auf diese Weise bestimmten Standortdaten können weiteren Mitteln 38 zur Umsetzung solcher Daten zur Verfügung gestellt werden. Bei einem solchen Mittel 38 kann es sich beispielsweise um ein Navigationssystem handeln.

Gemäß dem erfindungsgemäßen Verfahren werden die auf diese Weise in der Rechnereinheit 32 bestimmten Standortdaten über die Übertragungseinrichtung 31 an den mit dem Mobilfunknetz 15 verbundenen separaten Rechner 20 übertragen. Hier können die ermittelten Standortdaten aller Übertragungseinrichtungen 31 weiter verwertet werden, etwa indem ein Bewegungsprofil zu Zwecken der Verkehrsvorhersage erstellt wird.

Alternativ können die Mittel 35 die im ersten Schritt ausgelesenen Netzwerkparameter über die Übertragungseinrichtung 31 an den separaten Rechner 20 schicken. In diesem könnte dann zentral die weitere Bestimmung der entsprechenden Standortdaten für jede Übertragungseinrichtung 31 vorgenommen werden, indem den Netzwerkparametern in der weiter oben beschriebenen Weise Geo-Referenzdaten, beispielsweise in Form von Ortsbeschreibungen, zugeordnet werden.

### Bezugszeichenliste

- 10: Kommunikationssystem (Mobilfunksystem)

- 15: Kommunikationsnetzwerk (Mobilfunknetz) Rechner (Server)

- 30: Endeinrichtung
- 31: Übertragungseinrichtung (Mobiltelefon)
- 32: Rechnereinheit
- 33: Schnittstelle
- 34: Prozessoreinheit
- 35: Mittel zum Auslesen von Netzwerkparametem und zum Bestimmen des Standorts der Übertragungseinrichtung
- 36: Speichereinheit
- 37: Geo-Referenzdaten
- 38: Mittel zum Umsetzen der Standortdaten

- 40: Daten/Signale

## Patentansprüche

1. Endeinrichtung zur Verwendung mit einem Daten-und/oder Kommunikationsnetzwerk (15) eines Daten-und/oder Kommunikationssystems (10),
mit einer Übertragungseinrichtung (31) zum Empfangen und/oder Übertragen von Daten und/oder Signalen (40) aus dem und/oder in das Netzwerk (15) umfassend eine SIM-Karte und
mit einer von der Übertragungseinrichtung (31) unabhängigen Rechnereinheit (32), die mit der Übertragungseinrichtung (31) zumindest zeitweilig über eine Schnittstelle der Rechnereinheit (32) verbunden ist, wobei die Übertragungseinrichtung (31) und die Rechnereinheit (32) über die Schnittstelle je nach Bedarf kommunizieren, interagieren und Daten und/oder Signale austauschen können,
aufweisend eine Prozessoreinheit (34) und
Mittel (35) zum Auslesen solcher Netzwerkparameter über die Übertragungseinrichtung (31), die zum Lokalisieren der Übertragungseinrichtung (31) verwendet werden, wobei die Mittel (35) die ausgelesenen Netzwerkparameter zum Bestimmen des aktuellen Standorts der Übertragungseinrichtung (31) über die Übertragungseinrichtung (31 an einen mit dem Netzwerk (15) verbundenen Rechner (20) weiterleiten.

2. Endeinrichtung nach Anspruch 1, **dadurch gekennzeichnet, dass** die Übertragungseinrichtung (31) und/oder die Rechnereinheit (32) mobil ausgestaltet ist/sind.

3. Endeinrichtung nach Anspruch 1 oder 2 zur Verwendung in einem Mobilfunknetz, insbesondere in einem zellularen Mobilfunknetz.

4. Endeinrichtung nach einem der Ansprüche 1 bis 3, **dadurch gekennzeichnet, dass** die Übertragungseinrichtung (31) und die Rechnereinheit (32) als ein einziges Bauteil ausgebildet sind.

5. Endeinrichtung nach einem der Ansprüche 1 bis 3, **dadurch gekennzeichnet, dass** die Übertragungseinrichtung (31) und die Rechnereinheit (32) als separate Bauteile ausgebildet sind.

6. Endeinrichtung nach einem der Ansprüche 1 bis 5, **dadurch gekennzeichnet, dass** diese wenigstens eine Speichereinheit (36) aufweist und dass die Speichereinheit (36) insbesondere in der Rechnereinheit (32) und/oder der Übertragungseinrichtung (31) vorgesehen ist.

7. Endeinrichtung nach einem der Ansprüche 1 bis 6, **dadurch gekennzeichnet, dass** die Schnittstelle (33) als Infrarot-Schnittstelle, als Bluetooth-Schnittstelle oder als Verdrahtung ausgebildet ist.

8. Endeinrichtung nach einem der Ansprüche 1 bis 7, **dadurch gekennzeichnet, dass** die Übertragungseinrichtung (31) als Mobiltelefon, insbesondere als zellulares Mobiltelefon und/oder als Modem, insbesondere als zellulares Modem, ausgebildet ist.

9. Endeinrichtung nach einem der Ansprüche 1 bis 8, **dadurch gekennzeichnet, dass** die Rechnereinheit (32) als Personal Digital Assistän, PDA, und/oder als mobiler Computer und/oder als Fahrzeugrechner ausgebildet ist.

10. Daten und/oder Kommunikationssystem, mit einem Daten-und/oder Kommunikationsnetzwerk (15) und einer oder mehreren Endeinrichtungen nach einem der Ansprüche 1 bis 9.

11. Daten und/oder Kommunikationssystem nach Anspruch 10, weiterhin umfassend dem mit den Netzwerk (15) verbundenen Rechner (20).

12. Daten und/oder Kommunikationssystem nach Anspruch 11, **dadurch gekennzeichnet, dass** in dem Rechner Programmittel vorgesehen sind, die den ausgelesenen Netzwerkparametern Geo-Referenzdaten (37) zuordnen.

13. Daten und/oder Kommunikationssystem nach Anspruch 11 oder 12, **dadurch gekennzeichnet, dass** die Programmittel zur Zuordnung der ausgelesenen Netzwerkparameter zu einer Beschreibung des durch die Netzwerkparameter bestimmten Standorts ausgebildet sind.

14. Daten und/oder Kommunikationssystem nach einem der Ansprüche 10-13, **dadurch gekennzeichnet, dass** das Datennetzwerk das Internet ist.

15. Daten und/oder Kommunikationssystem nach einem der Ansprüche 10-14, **dadurch gekennzeichnet, dass** das Kommunikationsnetzwerk (15) als Mobilfunknetz, insbesondere als zellulares Mobilfunknetz ausgebildet ist.

16. Verfahren zum Lokalisieren einer Übertragungseinrichtung einer Endeinrichtung nach einem der Ansprüche 1 bis 9 in einem Daten-und/oder Kommunikationssystem, insbesondere nach einem der Ansprüche 10-15,
wobei mit der Übertragungseinrichtung Daten und/oder Signale aus einem und/oder in ein Daten-und/ oder Kommunikationsnetzwerk des Daten-und/oder Kommunikationssystems übertragen werden, mit folgenden Schritten:
b) die Mittel zum Auslesen der Netzwerkparameter und zum Bestimmen des Standorts der Übertragungseinrichtung nehmen über die Schnittstelle Zugriff auf die Übertragungseinrichtung und lesen solche Netzwerkparameter aus, die vom Netzwerk zum Lokalisieren der Übertragungseinrichtung verwendet werden;
c) die Mittel zum Auslesen der Netzwerkparameter und zum Bestimmen des Standorts der Übertragungseinrichtung senden die ausgelesenen Netzwerkparameter über die Übertragungseinrichtung an einen mit dem Netzwerk kommunizierenden Rechner ;
d) im Rechner wird der aktuelle Standort der Übertragungseinrichtung aufgrund der ausgelesenen Netzwerkparameter bestimmt.

17. Verfahren nach Anspruch 16, **dadurch gekennzeichnet, dass** den ausgelesenen Netzwerkparametern über in den Mitteln zum Auslesen der Netzwerkparameter und zum Bestimmen des Standorts der Übertragungseinrichtung und/oder in dem Rechner vorgesehene Programmittel Geo-Referenzdaten zugeordnet werden.

18. Verfahren nach Anspruch 17, **dadurch gekennzeichnet, dass** den ausgelesenen Netzwerkparametern Beschreibungen des durch die Netzwerkparameter bestimmten Standorts zugeordnet werden.

19. Verfahren nach einem der Ansprüche 16-18, **dadurch gekennzeichnet, dass** die ausgelesenen Netzwerkparameter und/oder die daraus bestimmten Standortdaten in einer Speichereinheit abgespeichert werden.

20. Verfahren nach einem der Ansprüche 16-19, **dadurch gekennzeichnet, dass** eine Übertragungseinrichtung in einem Mobilfunknetz, insbesondere in einem zellularen Mobilfunknetz, lokalisiert wird.

## Claims

1. A terminal device for use with a data and/or communication network (15) of a data and/or communication system (10),
with a transmission device (31) for receiving and/or transmitting data and/or signals (40) from and/or into the network (15), comprising a SIM card, and with a computer unit (32) that is independent of the transmission device (31) and that is connected, at least at times, to the transmission device (31) via an interface of the computer unit (32), whereby, as needed, the transmission device (31) and the computer unit (32) communicate, interact and can exchange data and/or signals via the interface,
having a processor unit (34) and,
having means (35) for reading out such network parameters via the transmission device (31) that are then used to locate the transmission device (31), whereby the means (35) forward the read-out network parameters that serve to determine the current location of the transmission device (31) via the transmission device (31) to a computer (20) that is connected to the network (15).

2. The terminal device according to claim 1, **characterized in that** the transmission device (31) and/or the computer unit (32) is/are configured to be mobile.

3. The terminal device according to claim 1 or 2 for use in a mobile telecommunications network, especially in a cellular mobile telecommunications network.

4. The terminal device according to one of claims 1 to 3, **characterized in that** the transmission device (31) and the computer unit (32) are configured as a combined component.

5. The terminal device according to one of claims 1 to 3, **characterized in that** the transmission device (31) and the computer unit (32) are configured as separate components.

6. The terminal device according to one of claims 1 to 5, **characterized in that** it has at least one memory unit (36) and **in that** the memory unit (36) is especially provided in the computer unit (32) and/or in the transmission device (31).

7. The terminal device according to one of claims 1 to 6, **characterized in that** the interface (33) is configured as an infrared interface, as a Bluetooth interface or in the form of wiring.

8. The terminal device according to one of claims 1 to 7, **characterized in that** the transmission device (31) is configured as a mobile phone, especially as a cellular mobile phone and/or as a modem, especially as a cellular modem.

9. The terminal device according to one of clams 1 to 8, **characterized in that** the computer unit (32) is configured as a Personal Digital Assistant PDA and/or as a mobile computer and/or as a vehicle on-board computer.

10. A data and/or communication system with a data and/or communication network (15) and with one or more terminal devices according to one of claims 1 to 9.

11. The data and/or communication system according to claim 10, also comprising the computer (20) that is connected to the network (15).

12. The data and/or communication system according to claim 11, **characterized in that** the computer has programming means that associate georeference data (37) from the read-out network parameters.

13. The data and/or communication system according to claim 11 or 12, **characterized in that** the programming means are configured to associate the read-out network parameters with a description of the location determined on the basis of the network parameters.

14. The data and/or communication system according to one of claims 10 to 13, **characterized in that** the data network is the Internet.

15. The data and/or communication system according to one of claims 10 to 14, **characterized in that** the communication network (15) is configured as a mobile telecommunications network, especially as a cellular mobile telecommunications network.

16. A method for locating a transmission device of a terminal device according to one of claims 1 to 9 in a data and/or communication system, especially according to one of claims 10 to 15,
whereby the transmission device transmits data and/or signals from and/or into a data and/or communication network of the data and/or communication system, comprising the following steps:
b) the means for reading out the network parameters and for determining the location of the transmission device access the transmission device via the interface and they read out the network parameters that are used by the network in order to locate the transmission device;
c) the means for reading out the network parameters and for determining the location of the transmission device send the read-out network parameters via the transmission device to a computer that communicates with the network;
d) in the computer, the current location of the transmission device is determined on the basis of the read-out network parameters.

17. The method according to claim 16, **characterized in that** georeference data is associated with the read-out network parameters via programming means that are provided in the means for reading out the network parameters and for determining the location of the transmission device and/or that are provided in the computer.

18. The method according to claim 17, **characterized in that** descriptions of the location determined on the basis of the network parameters are associated with the read-out network parameters.

19. The method according to one of claims 16 to 18, **characterized in that** the read-out network parameters and/or the location data determined on this basis are stored in a memory unit.

20. The method according to one of claims 16 to 19, **characterized in that** a transmission device is located in a mobile telecommunications network, especially in a cellular mobile telecommunications network.

## Revendications

1. Dispositif terminal destiné à être utilisé avec un réseau de données et/ou de communication (15) d'un système de données et/ou de communication (10), comportant :
- un dispositif de transmission (31) pour recevoir et/ou transmettre des données et/ou des signaux (40) à partir du et/ou vers le réseau (15), comprenant une carte SIM et
- une unité informatique (32) indépendante du dispositif de transmission (31) et reliée au dispositif de transmission (31) au moins temporairement via une interface de l'unité informatique (32), le dispositif de transmission (31) et l'unité informatique (32) pouvant, via l'interface, communiquer, interagir et échanger des données et/ou des signaux selon les besoins,
- comportant une unité de processeur (34) et
- des moyens (35) pour extraire, via le dispositif de transmission (31), des paramètres de réseau qui sont utilisés pour localiser le dispositif de transmission (31), les moyens (35) retransmettant les paramètres de réseau extraits pour déterminer la localisation actuelle du dispositif de transmission (31) via le dispositif de transmission (31) à un ordinateur (20) relié au réseau (15).

2. Dispositif terminal selon la revendication 1, **caractérisé en ce que** le dispositif de transmission (31) et/ou l'unité informatique (32) sont réalisés mobiles.

3. Dispositif terminal selon la revendication 1 ou 2, destiné à être utilisé dans un réseau radio mobile, et plus particulièrement dans un réseau radio mobile cellulaire.

4. Dispositif terminal selon l'une des revendications 1 à 3, **caractérisé en ce que** le dispositif de transmission (31) et l'unité informatique (32) sont réalisés en tant que composant unique.

5. Dispositif terminal selon l'une des revendications 1 à 3, **caractérisé en ce que** le dispositif de transmission (31) et l'unité informatique (32) sont réalisés en tant que composants séparés.

6. Dispositif terminal selon l'une des revendications 1 à 5, **caractérisé en ce qu'**il comporte au moins une unité de mémoire (36) et **en ce que** l'unité de mémoire (36) est prévue notamment dans l'unité informatique (32) et/ou le dispositif de transmission (31).

7. Dispositif terminal selon l'une des revendications 1 à 6, **caractérisé en ce que** l'interface (33) est réalisée en tant qu'interface infrarouge, interface Bluetooth ou câblage.

8. Dispositif terminal selon l'une des revendications 1 à 7, **caractérisé en ce que** le dispositif de transmission (31) est réalisé en tant que téléphone mobile, et plus particulièrement en tant que téléphone mobile cellulaire et/ou en tant que modem, et plus particulièrement en tant que modem cellulaire.

9. Dispositif terminal selon l'une des revendications 1 à 8, **caractérisé en ce que** l'unité informatique (32) est réalisée en tant qu'assistant numérique personnel PDA et/ou en tant qu'ordinateur mobile et/ou en tant qu'ordinateur de véhicule.

10. Système de données et/ou de communication, comportant un réseau de données et/ou de communication (15) et un ou plusieurs dispositifs terminaux selon l'une des revendications 1 à 9.

11. Système de données et/ou de communication selon la revendication 10, comprenant en outre l'ordinateur (20) relié au réseau (15).

12. Système de données et/ou de communication selon la revendication 11, **caractérisé en ce que** sont prévus, dans l'ordinateur, des programmes qui associent des géodonnées de référence (37) aux paramètres de réseau extraits.

13. Système de données et/ou de communication selon la revendication 11 ou 12, **caractérisé en ce que** les programmes sont réalisés pour associer les paramètres de réseau extraits à une description de la localisation déterminée par les paramètres de réseau.

14. Système de données et/ou de communication selon l'une des revendications 10 à 13, **caractérisé en ce que** le réseau de données est l'internet.

15. Système de données et/ou de communication selon l'une des revendications 10 à 14, **caractérisé en ce que** le réseau de communication (15) est réalisé en tant que réseau radio mobile, et plus particulièrement en tant que réseau radio mobile cellulaire.

16. Procédé de localisation d'un dispositif de transmission d'un dispositif terminal selon l'une des revendications 1 à 9 dans un système de communication de données et/ou de communication, et plus particulièrement selon l'une des revendications 10 à 15,
le dispositif de transmission permettant la transmission de données et/ou de signaux à partir d'un et/ou vers un réseau de données et/ou de communication du système de données et/ou de communication, comportant les étapes suivantes :
b) les moyens d'extraction des paramètres de réseau et de détermination de la localisation du dispositif de transmission accèdent au dispositif de transmission via l'interface et extraient des paramètres de réseau qui sont utilisés par le réseau pour localiser le dispositif de transmission ;
c) les moyens d'extraction des paramètres de réseau et de détermination de la localisation du dispositif de transmission envoient, via le dispositif de transmission, les paramètres de réseau extraits à un ordinateur qui communique avec le réseau ;
d) dans l'ordinateur, la localisation actuelle du dispositif de transmission est déterminée sur la base des paramètres de réseau extraits.

17. Procédé selon la revendication 16, **caractérisé en ce que** des géodonnées de référence sont associées aux paramètres de réseau extraits via des programmes prévus dans les moyens d'extraction des paramètres de réseau et de détermination de la localisation du dispositif de transmission et/ou dans l'ordinateur.

18. Procédé selon la revendication 17, **caractérisé en ce que** des descriptions de la localisation déterminée par les paramètres de réseau sont associées aux paramètres de réseau extraits.

19. Procédé selon l'une des revendications 16 à 18, **caractérisé en ce que** les paramètres de réseau extraits et/ou les données de localisation déterminées sur cette base sont sauvegardés dans une unité de mémoire.

20. Procédé selon l'une des revendications 16 à 19, **caractérisé en ce qu'**un dispositif de transmission est localisé dans un réseau radio mobile, et plus particulièrement dans un réseau radio mobile cellulaire.
